# FASCICULE DE BREVET EUROPEEN

(11) **EP 1 388 444 B1**
(45) Date de publication et mention de la délivrance du brevet: **22.02.2006**
(21) Numéro de dépôt: 03291824.5
(22) Date de dépôt: 24.07.2003
(51) Int. Cl.: B60H 1/00

(54) **Système de climatisation**
Klimaanlage
Air conditioning system

(30) Priorité: 07.08.2002 FR 0210023
(43) Date de publication de la demande: 11.02.2004
(73) Titulaire: Peugeot Citroen Automobiles S.A., 78140 Vélizy Villacoublay (FR)
(72) Inventeur: Pintat, Bruno, 92190 Meudon (FR)
(74) Mandataire: Robert, Jean-François

(56) Documents cités:
- WO-A-99/10191
- FR-A- 1 415 561
- US-A- 4 280 330
- STOCKHOLM MM J ET AL: "UTILISATION DE LA THERMOELECTRICITE DANS LE VEHICULE AUTOMOBILE PERSPECTIVES TECHNICO-ECONOMIQUES ACTUELLES" INGENIEURS DE L'AUTOMOBILE, RAIP. BOULOGNE, FR, no. 687, 1 mars 1994 (1994-03-01), pages 10-11, XP000435028 ISSN: 0020-1200

## Description

L'invention se rapporte à un système de climatisation et plus particulièrement à un tel système intégrable dans l'habitacle d'un véhicule automobile pour tempérer l'espace des passagers arrières. Un système selon le préambule est divulgué dans le document WO 99/10191.

Les systèmes de climatisation actuels utilisent la technique très connue de la pompe à chaleur. Dans un véhicule automobile, cette technique est utilisée pour réguler la température dans l'habitacle. Ainsi, des aérateurs fournis en air climatisé sont présents par exemple sur la planche de bord, dans les portes avants, sous les sièges avants ou même sur les pieds milieux.

Cependant, il est difficile à partir du climatiseur principal de fournir de l'air tempéré aux passagers arrières. En effet, les conduits sont difficilement intégrables ailleurs que sous les sièges des passagers avants. Ainsi, pour fournir de l'air tempéré aux passagers arrières les techniques actuelles consiste à rajouter un climatiseur additionnel encombrant ainsi que des aérateurs additionnels fournit en air par ce climatiseur.

Le but de la présente invention est de pallier tout ou partie les inconvénients cités précédemment en proposant un système de climatisation de constitution simple et facilement intégrable.

A cet effet, l'invention se rapporte à un système de climatisation d'air selon la première revendication.

Cela permet de limiter les pièces du système et de l'améliorer à proximité de l'espace à tempérer en dérivant plus loin la production de la deuxième face.

Avantageusement, lesdits moyens d'échanges comportent, selon l'invention, une enceinte sensiblement parallélépipédique contenant au moins une lame parallèle audit flux d'air aspiré, les matériaux de ladite enceinte et desdites lames étant des conducteurs thermiques pour permettre l'homogénéisation et l'optimisation de l'échange thermique dans ladite enceinte. Cela autorise une plus grande surface d'échange et un air rejeté à une température sensiblement uniforme.

Selon l'invention, le système peut utiliser le dissipateur qui existe déjà dans le coffre.

Le dispositif de transport comporte, avantageusement selon l'invention, de plus des moyens de ventilation propres à accélérer ledit transport en coopérant avec ledit moyen dissipateur. Cela permet en complément, par exemple, d'un « radiateur » ou d'une simple buse de sortie, d'évacuer plus rapidement l'énergie thermique.

De manière avantageuse, ledit moyen du type caloduc comporte, selon l'invention, un tube étanche métallique contenant un fluide caloporteur permettant audit fluide caloporteur, au contact de la production thermique de ladite deuxième face de la cellule du type Peltier, de changer de phase localement induisant un effet capillaire propre à déplacer l'énergie de ladite production thermique. Cela permet grâce à ce tube de transporter l'énergie thermique sans avoir à utiliser de liquide frigorigène ni de pompe en un minimum d'encombrement.

L'invention se rapporte également à un véhicule automobile caractérisé en ce qu'il comporte un système de climatisation comme précédemment cité. Ce dernier étant monté de façon préférentielle dans l'habitacle pour permettre de tempérer l'espace des passagers arrières.

D'autres particularités et avantages ressortiront clairement de la description qui en est faite ci-après, à titre indicatif et nullement limitatif, en référence à l'unique figure annotée représentant un schéma général du système de climatisation selon l'invention.

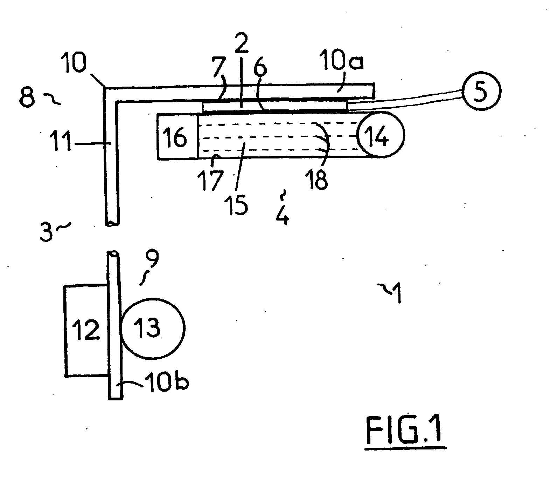

Comme illustré dans l'exemple de la figure 1, on peut voir que le système de climatisation 1 comporte trois éléments distincts, la cellule 2 à effet Peltier, une première zone thermique 3 et une deuxième zone thermique 4.

La cellule 2 utilise l'effet Peltier très connu qui, à partir d'un champ électrique généré par une source de courant 5, induit pour ses deux plaques utiles et parallèles 6 et 7, pour une première, des réactions endothermiques et pour la deuxième, des réactions exothermiques. Ainsi, la cellule 2 peut sur une face, par exemple 6, refroidir l'air qui l'environne et sur l'autre face 7, le chauffer. Par inversion des polarités de la source de courant 5, la cellule 2 inverse alors le caractère thermique des réactions à la surface de chacune de ses faces 6 et 7. Ainsi par rapport à l'exemple ci-dessus, la face 7 refroidit l'air en contact avec elle et la face 6 le chauffe. Cette technique par effet Peltier étant très connue, elle ne sera pas d'avantage détaillée ci-après.

La première zone thermique 3 communiquant avec la face 7 de la cellule 2 à effet Peltier comporte principalement un caloduc 8 et des moyens de dissipation 9. Le caloduc 8 comporte un tube 10, par exemple obtenu par extrusion, qui renferme de façon étanche un fluide caloporteur 11, par exemple de l'eau ou de l'ammoniac, choisi suivant les plages de température du système de climatisation 1 ; La matière du tube 10 pouvant être par exemple du cuivre ou de l'aluminium.

Dans le cas où la zone thermique 3 est utilisée pour dissiper les calories de la face 7, la différence de température entre la zone environnant ladite face 10a et la zone 10b proche des moyens dissipateurs 9, provoque un changement de densité du fluide 11 contenu à l'intérieur du tube 10. Ce changement de densité induit un effet capillaire d'aspiration du fluide 11 de la zone chaude 10a vers la zone froide 10b. Le fluide caloporteur 11 forme donc une boucle thermique à l'intérieur du tube 10.

Les moyens dissipateurs 9, situés sensiblement à l'extrémité 10b du caloduc 8, comportent dans l'exemple de la figure 1 un extracteur 12 et un ventilateur 13. L'extracteur 12 peut, par exemple, être une simple buse ou un radiateur comportant une surface favorisant la dissipation de l'énergie thermique. Ainsi dans le cas ci-dessus, les calories venant de l'extrémité 10a grâce à ladite boucle thermique induite seront dissipées à l'extrémité 10b.

Dans l'exemple illustré à la figure 1, un ventilateur 13 est présent pour intensifier ledit effet capillaire du caloduc 8. Si c'est une simple buse qui est utilisée, le ventilateur 13 peut par exemple projeter de l'air vers l'ensemble extrémité 10b du caloduc 8 - buse 12 pour accélérer la dissipation. Dans le cas du radiateur, le ventilateur 13 peut être placé au-dessus de ce dernier pour améliorer la performance de la dissipation en aspirant l'air qui capte l'énergie transportée par le caloduc 8.

Dans un véhicule automobile comportant par exemple un extracteur d'air 12 dans le coffre, le ventilateur 13 peut par la même occasion améliorer la circulation de l'air dans l'habitacle en créant une aspiration induisant un sens de circulation de l'air de l'avant vers l'arrière du véhicule.

Ainsi, la première zone thermique 3 peut transporter les calories ou les frigories produites par la face 7 de la cellule 2 assez loin de l'espace à climatiser pour éviter de contrarier respectivement le refroidissement ou le réchauffement généré par la face 6 de la même cellule mais surtout pour déporter la fonction de dissipation en vue d'une meilleure intégration.

La deuxième zone thermique 4 est celle qui permet de climatiser l'air, par exemple, dans un habitacle de véhicule automobile. Elle comporte principalement un ventilateur 14, une enceinte 15 et un aérateur 16.

Dans le cas où la face 6 produit des frigories, le ventilateur 14 peut être situé sensiblement dans la partie haute (contenant l'air le plus chaud) de l'espace à refroidir. Cependant le système 1 étant réversible, il est préférable de placer le ventilateur 14 sensiblement à mi-distance entre le point le plus haut et le point le plus bas de l'espace à climatiser. Le ventilateur 14 est utilisé pour forcer l'air à entrer en contact avec l'enceinte 15 pour, soit le réchauffer, soit le refroidir.

L'enceinte 15 comporte une pièce périphérique sensiblement parallélépipédique 17 ouverte sur ses deux plus petites faces (non représentées) pour permettre la connexion d'une part avec ledit ventilateur et d'autre part avec l'aérateur 16. La surface de cette pièce 17 est partiellement en contact avec la face 6 de la cellule 2 à effet Peltier. Cela permet la conduction de l'énergie thermique ainsi générée par ladite face vers l'enceinte 15. La diffusion et l'échange avec l'air aspiré sont ensuite obtenus grâce à au moins une lame 18 contenue à l'intérieure de ladite pièce périphérique. Préférentiellement, les lames 18 sont parallèles par rapport à la direction du flux d'air venant du ventilateur 14. Ces lames 18 permettent une plus grande surface d'échange sans pour autant perturber le flux induit par le ventilateur 14.

Cela permet d'utiliser un ventilateur 14 facilement intégrable dans une faible épaisseur comme par exemple dans un pavillon de véhicule automobile ou un pied milieu.

Enfin, la deuxième zone thermique 4 comporte un aérateur 16 permettant de diriger le flux d'air réchauffé (ou refroidi) vers l'espace à climatiser. Bien entendu, plus l'aérateur 16 est simple et peu épais meilleure est l'économie d'argent et plus facile est l'intégration du système 1.

Grâce à ce système de climatisation 1, par exemple, les occupants à l'arrière d'un véhicule peuvent profiter d'air climatisé leur étant entièrement dédié sans pour autant dériver cet air par de longues buses venant du climatiseur principal. De plus, il est simple et facilement intégrable dans la partie arrière d'un véhicule automobile.

Bien entendu, la présente invention ne se limite pas à l'exemple illustré mais est susceptible de diverses variantes et modifications qui apparaîtront à l'homme de l'art. En particulier, la pièce périphérique 17 peut comporter à sa surface extérieure, en dehors de celle étant en contact avec la face 6, un isolant apte à mieux confiner l'échange entre l'enceinte 15 et l'air aspiré par le ventilateur 14. Egalement, l'intérieur de l'enceinte 15 (et l'enceinte elle-même) peut être de configuration différente comme par exemple comporter des chicanes. Enfin l'application de ce système de climatisation 1 ne saurait se limiter aux véhicules automobiles.

## Revendications

1. Système de climatisation d'air (1) d'un espace d'un véhicule automobile comportant au moins une cellule (2) du type Peltier comprenant au moins une face exothermique et au moins une face endothermique (6, 7), des moyens d'alimentation électrique (5) de ladite cellule, des moyens d'aspiration (14) dudit air, des moyens d'échange (15) entre l'air aspiré et une première face de ladite cellule situés en prolongement desdits moyens d'aspiration, des moyens de guidage (16) du flux d'air sortant desdits moyens d'échange, un dispositif de transport (3) de la production thermique d'une deuxième face de ladite cellule en dehors de l'espace où ledit flux d'air sera dirigé par lesdits moyens de guidage **caractérisé en ce que** ledit dispositif de transport comporte au moins un moyen (8) du type caloduc et en prolongement de ce dernier, un moyen dissipateur (12) de l'énergie thermique ainsi transportée obligeant la production thermique de ladite deuxième face à être dissipée en dehors dudit espace où ledit flux d'air est dirigé par les moyens de guidage (16) pour permettre suivant la polarité desdits moyens d'alimentation de sélectivement refroidir ou réchauffer ledit espace à l'aide de dudit air aspiré.

2. Système de climatisation (1) selon la revendication 1, **caractérisé en ce que** lesdits moyens d'échanges comportent une enceinte (17) sensiblement parallélépipédique contenant au moins une lame (18) parallèle audit flux d'air aspiré, les matériaux de ladite enceinte et desdites lames étant des conducteurs thermiques pour permettre l'homogénéisation et l'optimisation de l'échange thermique dans ladite enceinte.

3. Système de climatisation (1) selon la revendication 1 ou 2, **caractérisé en ce que** le dispositif de transport (3) comporte de plus des moyens de ventilation (13) propres à accélérer ledit transport en coopérant avec ledit moyen dissipateur.

4. Système de climatisation selon l'une des revendications précédentes, **caractérisé en ce que** ledit moyen du type caloduc comporte un tube (10) étanche métallique contenant un fluide caloporteur (11) permettant audit fluide caloporteur, au contact de la production thermique de ladite deuxième face de la cellule du type Peltier, de changer de phase localement induisant un effet capillaire propre à déplacer l'énergie de ladite production thermique.

5. Véhicule automobile **caractérisé en ce qu'**il comporte un système de climatisation (1) selon l'une des revendications précédentes.

6. Véhicule automobile selon la revendication 5, **caractérisé en ce que** ledit système de climatisation est monté dans l'habitacle pour permettre de tempérer l'espace des passagers arrières.

## Patentansprüche

1. Klimaanlage (1) für einen Raum eines Kraftfahrzeugs mit mindestens einer Peltier-Zelle (2), die mindestens eine exotherme Seite und mindestens eine endotherme Seite (6, 7) aufweist, mit Mitteln (5) zur Stromversorgung der Zelle, mit Mitteln (14) zum Ansaugen der Luft, mit Mitteln (15) zum Austausch zwischen der angesaugten Luft und einer ersten Seite der Zelle, die in Verlängerung der Saugmittel angeordnet sind, mit Mitteln (16) zum Führen des aus den Austauschmitteln kommenden Luftstroms, mit einer Vorrichtung (3) zum Transport der Wärmeproduktion einer zweiten Seite der Zelle außerhalb des Raums, in den der Luftstrom von den Führmitteln geleitet wird, **dadurch gekennzeichnet, dass** die Transportvorrichtung mindestens ein Mittel (8) von der Art eines Wärmerohrs und in Verlängerung von diesem ein Mittel (12) zum Ableiten der so erzeugten Wärmeenergie aufweist, das eine Ableitung der Wärmeproduktion der zweiten Seite außerhalb des Raums bewirkt, in den der Luftstrom von den Führmitteln (16) geleitet wird, um den Raum abhängig von der Polarität der Stromversorgung mithilfe der angesaugten Luft wahlweise kühlen oder heizen zu können.

2. Klimaanlage (1) nach Anspruch 1, **dadurch gekennzeichnet, dass** die Austauschmittel einen im Wesentlichen parallelepipedförmigen Behälter (17) umfassen, der mindestens eine Lamelle (18) parallel zum Strom der angesaugten Luft aufweist, wobei die Materialien des Behälters und der Lamellen wärmeleitfähig sind, um den Wärmeaustausch im Behälter zu homogenisieren und zu optimieren.

3. Klimaanlage (1) nach Anspruch 1 oder 2, **dadurch gekennzeichnet, dass** die Transportvorrichtung (3) außerdem Ventilatormittel (13) aufweist, die den Transport in Zusammenarbeit mit dem Ableitungsmittel beschleunigen können.

4. Klimaanlage nach einem der vorhergehenden Ansprüche, **dadurch gekennzeichnet, dass** das Mittel von der Art eines Wärmerohrs ein dichtes Metallrohr (10) umfasst, das ein wärmetransportierendes Fluid (11) enthält und es diesem erlaubt, in Kontakt mit der Wärmeproduktion der zweiten Seite der Peltier-Zelle stellenweise die Phase zu wechseln, was einen Kapillareffekt erzeugt, der die Energie der Wärmeproduktion bewegen kann.

5. Kraftfahrzeug, **dadurch gekennzeichnet, dass** es eine Klimaanlage (1) nach einem der vorhergehenden Ansprüche aufweist.

6. Kraftfahrzeug nach Anspruch 5, **dadurch gekennzeichnet, dass** die Klimaanlage im Fahrgastraum montiert wird, um den Raum der hinteren Fahrgäste zu temperieren.

## Claims

1. Air-conditioning system (1) for a compartment in a motor vehicle, comprising at least one cell (2) of the Peltier type comprising at least one exothermic face and at least one endothermic face (6, 7), power supply means (5) for said cell, means (14) for exhausting said air, exchange means (15) between the air exhausted and a first face of said cell, located in the extension of said exhaust means, means (16) for guiding the air flow leaving said exchange means, a device (3) for transporting the thermal product from a second face of said cell out of the compartment where said air flow is to be directed by said guide means **characterised in that** said transport device comprises at least one means (8) of the heat pipe type and, in the extension of the latter, a means (12) for dissipating the thermal energy thus transported, obliging the thermal product from said second face to be dissipated out of said compartment where said air flow is directed by the guide means (16) in order to make it possible, depending on the polarity of said supply means, to cool or heat said compartment selectively using said exhausted air.

2. Air-conditioning system (1) according to Claim 1, **characterised in that** said exchange means comprise a substantially parallelepipedal enclosure (17) containing at least one blade (18) parallel to said flow of exhausted air, the materials of said enclosure and of said blades being thermal conductors in order to allow homogenisation and optimisation of the heat exchange in said enclosure.

3. Air-conditioning system (1) according to Claim 1 or 2, **characterised in that** the transport device (3) further comprises ventilation means (13) suitable for accelerating said transport by co-operating with said dissipating means.

4. Air-conditioning system according to one of the preceding claims, **characterised in that** said heat pipe-type means comprises a sealed metal tube (10) containing a coolant (11) allowing said coolant, when it comes into contact with the thermal product of said second face of the Peltier-type cell, to change phase locally, inducing a capillary effect capable of displacing the energy of said thermal product.

5. Motor vehicle **characterised in that** it comprises an air-conditioning system (1) according to one of the preceding claims.

6. Motor vehicle according to Claim 5, **characterised in that** said air-conditioning system is installed in the passenger compartment in order to make it possible to temper the rear-seat passenger compartment.
